# EUROPÄISCHE PATENTSCHRIFT

(11) **EP 3 387 406 B1**
(45) Veröffentlichungstag und Bekanntmachung des Hinweises auf die Patenterteilung: **14.12.2022**
(21) Anmeldenummer: 16795273.8
(22) Anmeldetag: 08.11.2016
(51) Int. Cl.: F16C 32/06, G01M 1/24

(54) **RADKRAFTDYNAMOMETER ZUR MESSUNG VON REIFENKRÄFTEN**
WHEEL DYNAMOMETER FOR MEASUREMENT OF FORCES APPLIED TO THE TYRE
DYNAMOMÈTRE DE ROUE POUR LA MESURE DES FORCES APPLIQUÉES AU PNEU

(30) Priorität: 08.12.2015 DE 102015224638
(43) Veröffentlichungstag der Anmeldung: 17.10.2018
(73) Patentinhaber: ZF Friedrichshafen AG, 88046 Friedrichshafen (DE)
(72) Erfinder: EISENBEISS, Jens, 94081 Fuerstenzell (DE); BÖSL, Roland, 94127 Neuburg am Inn (DE)
(74) Vertreter: ZF Friedrichshafen AG
(86) Internationale Anmeldenummer: PCT/EP2016/076897
(87) Internationale Veröffentlichungsnummer: WO 2017/097514

(56) Entgegenhaltungen:
- EP-A2- 0 735 356
- DE-A1- 10 004 419
- DE-A1-102008 034 484
- DE-B4- 10 260 000

## Beschreibung

Die Erfindung betrifft ein Radkraftdynamometer nach dem Oberbegriff des Patentanspruches 1.

Durch die DE 102 60 000 B4 der Anmelderin wurde ein Radkraftdynamometer zum Messen von Reifenkräften bekannt, wobei ein Fahrzeugrad an einer Radachse befestigt ist, welche über Wälzlager in einer Hohlwelle gelagert ist. Die Hohlwelle ist hydrostatisch in einem gestellfesten Gehäuse gelagert und weist einen Bund auf, in welchem Kraftsensoren zur Messung der Kräfte und Momente angeordnet sind. Die auf das Rad wirkenden Kräfte werden somit über die Radachse auf die Hohlwelle übertragen, die ihrerseits reibungsfrei mittels Hydrostatik in dem Gehäuse "schwimmt". Bei der Messung von Reifenkräften mittels eines Radkraftdynamometers können Messfehler auftreten, welche durch die Bauart der Messvorrichtung und deren Schwingungsverhalten bedingt sind. Weitere für die Erfindung relevante Literatur zum Stand der Technik wird durch die Patentdokumente DE 100 04 419 A1 , EP 0 735 356 A2 und DE 10 2008 034484 A1 repräsentiert.

Eine Aufgabe der Erfindung besteht darin, ein verbessertes Radkraftdynamometer vorzuschlagen.

Diese Aufgabe wird erfindungsgemäß durch das Radkraftdynamometer gemäß Anspruch 1 gelöst. Vorteilhafte Ausgestaltungen ergeben sich aus den Unteransprüchen.

Die Erfindung betrifft ein Radkraftdynamometer zur Messung von Kräften und Momenten, die auf einen Fahrzeugreifen und ein Fahrzeugrad wirken, mittels Kraftsensoren, wobei das Fahrzeugrad drehbar mittels einer Radachse gelagert ist. Das erfindungsgemäße Radkraftdynamometer zeichnet sich dadurch aus, dass die Radachse als kompakter Rotor ausgebildet ist, welcher axialfest und in Umfangsrichtung drehbar in einem biegesteifen und ortsfest angeordneten Gehäuse gelagert ist. Dadurch, dass die Radachse nicht mehr - wie beim Stand der Technik - massiv ausgebildet und innerhalb einer Hohlwelle gelagert, sondern erfindungsgemäß als ein von einem Gehäuse eingefasster kompakter Rotor ausgebildet ist, wird aufgrund des vergrößerten Durchmessers und des Kreisringquerschnittes des Gehäuses ein maximales Widerstandsmoment und damit eine hohe Biegesteifigkeit erreicht. Darüber hinaus wird die Masse der Radachse reduziert. Zudem ist ein nicht rotierendes und biegesteifes Gehäuse vorgesehen, welches den kompakten Rotor einfasst. Das ortsfest angeordnete Gehäuse in Verbindung mit dem kompakten Rotor ergibt eine äußerst biegesteife Radlagerung, welche unter der Einwirkung der bei der Messung auftretenden Reifenkräfte nur geringe Verformungen zulässt. Die Erfindung geht von der Erkenntnis aus, dass ein Grund für die Messfehler in einer relativ niedrigen Eigenfrequenz der Messvorrichtung im Verhältnis zu den Messfrequenzen liegt, welche im Rahmen einer sog. High Speed Uniformity- (HSU-) Messung erwünscht sind. Durch die erfindungsgemäße Radlagerung kompakter Rotor und biegesteifem Gehäuse ergibt sich eine hohe Biegesteifigkeit und damit eine relativ hohe Eigenfrequenz des Radkraftdynamometers. Das Auftreten von Resonanzen mit den Messfrequenzen kann daher vermieden werden, da letztere unterhalb der hohen Eigenfrequenzen der Radlagerung liegen. Es ergeben sich optimierte Übertragungsfunktionen, die eine geringere Amplitudenerhöhung und einen geringeren Phasenversatz zeigen.

Gemäß einer bevorzugten Ausführungsform der Erfindung ist es vorgesehen, dass das Gehäuse einen Gehäusekörper und eine Gehäusekappe umfasst. Somit kann der kompakte Rotor zwischen dem Gehäusekörper und der Gehäusekappe fest eingespannt werden. Dies führt zu vergleichsweise hoher Biegesteifigkeit bei nur geringer Masse, was wiederum zu höheren Eigenfrequenzen führt. Außerdem kann somit das Gehäuse geöffnet werden, um den kompakten Rotor im Gehäuse anzuordnen bzw. aus dem Gehäuse zu entfernen. Dies vereinfacht insbesondere Wartungsvorgänge. Die Gehäusekappe kann z.B. mittels Schraubverbindungen am Gehäusekörper befestigt werden.

Gemäß einer weiteren bevorzugten Ausführungsform der Erfindung ist es vorgesehen, dass der kompakte Rotor einen äußeren Kragen aufweist. Der äußere Kragen bietet vorteilhaft einen geeigneten Angreifpunkt, um den kompakten Rotor axialfest und dennoch in Umfangsrichtung drehbar im Gehäuse einzuspannen bzw. zu lagern. Gleichzeitig trägt dies zur Erhöhung der Biegesteifigkeit bei.

Gemäß einer weiteren bevorzugten Ausführungsform der Erfindung ist es vorgesehen, dass der kompakte Rotor einen Rotorboden und einen Rotorring umfasst, wobei der Rotorboden und der Rotorring jeweils eine Radialumfangsänderung aufweisen, indem sie sich in einem Bereich einer axialen Mitte des Rotors kegelartig verjüngen oder verstärken. Die schrägen Flanken dieser Radialumfangsänderung bieten einen alternativen Angreifpunkt, um den Rotor axialfest und dennoch in Umfangsrichtung drehbar im Gehäuse einzuspannen bzw. zu lagern.

Gemäß einer besonders bevorzugten Ausführungsform der Erfindung ist es vorgesehen, dass die Gehäusekappe eine Öffnung aufweist, durch welche ein Rotorboden des Rotors geführt ist. Somit kann der Fahrzeugreifen am Rotorboden des Rotors angeordnet werden, während der Rotor drehbar im Gehäuse gehalten wird.

Gemäß einer weiteren bevorzugten Ausführungsform der Erfindung ist es vorgesehen, dass der Gehäusekörper an einer ortsfesten Tragstruktur abgestützt ist. Damit ergibt sich das Konzept eines einseitig eingespannten Balkens mit hoher Biegesteifigkeit und hoher Eigenfrequenz.

Gemäß einer weiteren bevorzugten Ausführungsform der Erfindung ist es vorgesehen, dass die Kraftsensoren zwischen dem Gehäusekörper und der Tragstruktur angeordnet sind. Durch die Rotation des Fahrzeugreifens bzw. des Fahrzeugrads erzeugte Kräfte bzw. Momente setzen sich in das Gehäuse fort. Über den Gehäusekörper werden diese Kräfte bzw. Momente auf die Kraftsensoren übertragen und können von diesen erfasst werden. Es können dabei mehrere, zum Teil unterschiedliche Kraftsensoren zur Messung der Reifenkräfte angeordnet werden.

Gemäß einer besonders bevorzugten Ausführungsform der Erfindung ist es vorgesehen, dass das Radkraftdynamometer weiterhin Gleitlager umfasst, welche zwischen dem Rotor und dem Gehäuse angeordnet sind. Dies gewährleistet eine reibungsarme Drehbarkeit des Rotors gegenüber dem Gehäuse.

Gemäß einer ganz besonders bevorzugten Ausführungsform der Erfindung ist es vorgesehen, dass ein erstes Gleitlager als Radiallager ausgebildet ist und dass ein zweites und ein drittes Gleitlager jeweils als Axiallager ausgebildet sind. Dies erhöht die Steifigkeit des Lagerkonzepts bei gleichzeitiger Gewährleistung einer reibungsarmen Drehbarkeit des Rotors gegenüber dem Gehäuse.

Gemäß einer ebenfalls ganz besonders bevorzugten Ausführungsform der Erfindung ist es vorgesehen, dass ein erstes und ein zweites Gleitlager als Kegellager ausgebildet sind. Auch dies erhöht die Steifigkeit des Lagerkonzepts bei gleichzeitiger Gewährleistung einer reibungsarmen Drehbarkeit des Rotors gegenüber dem Gehäuse, wobei zusätzlich nur eine minimale Anzahl an Gleitlagern, nämlich zwei Gleitlager, benötigt werden.

Gemäß einer ebenfalls besonders bevorzugten Ausführungsform der Erfindung ist es vorgesehen, dass die Gleitlager als hydrostatische Gleitlager ausgebildet sind. Bei hydrostatischen Lagern wird der erforderliche Schmierfilm über eine zusätzliche Schmierölpumpe bereitgestellt, welche das Schmieröl unter Druck in den Schmierspalt fördert. Damit ergibt sich für ein hydrostatisches Gleitlager der Vorteil, dass bereits beim Anlauf, d. h. geringen Drehzahlen eine minimale Reibung auftritt. Ein weiterer Vorteil besteht darin, dass ein hydrostatisches Gleitlager gegenüber den herkömmlichen Wälzlagerungen schon bei sehr niedrigen Anregungsfrequenzen eine höhere Steifigkeit aufweist. Bei höheren, für die Messung der Hochgeschwindigkeitsgleichförmigkeit (HSU) relevanten Frequenzen ist die Steifigkeit sehr viel höher als bei Wälzlagern. Insofern tragen auch die hydrostatischen Gleitlager erheblich dazu bei, das Steifigkeitspotential der Radlagerung weiter auszuschöpfen, d. h. die Eigenfrequenz der Messvorrichtung zu erhöhten.

Gemäß einer weiteren besonders bevorzugten Ausführungsform der Erfindung ist es vorgesehen, dass das erste axiale Gleitlager an einer Radialfläche des Rotors oder an einer Radialfläche des Kragens angeordnet ist. Dies hat sich als besonders vorteilhaft hinsichtlich der Steifigkeit der Lagerung erwiesen.

Gemäß einer nochmals weiteren besonders bevorzugten Ausführungsform der Erfindung ist es vorgesehen, dass das zweite und das dritte Gleitlager an gegenüberliegenden axialen Endflächen des Kragens angeordnet sind. Auch dies hat sich als besonders vorteilhaft hinsichtlich der Steifigkeit der Lagerung erwiesen.

Gemäß einer weiteren bevorzugten Ausführungsform der Erfindung ist es vorgesehen, dass der Rotorboden des Rotors mittels Radflanschadaptern drehfest mit dem Fahrzeugrad verbindbar ist. Dies stellt eine geeignete Möglichkeit zum biegesteifen und drehfesten Verbinden des zu prüfenden Fahrzeugrads mit dem Radkraftdynamometer dar. Die Radflanschadapter sind dabei derart ausgebildet, dass sie eine Befestigung von Radfelgen mit unterschiedlichen Felgenabmessungen an Radkraftdynamometer ermöglichen.

Gemäß einer weiteren bevorzugten Ausführungsform der Erfindung ist es vorgesehen, dass der Gehäusekörper einen Zapfen aufweist, der zumindest im Bereich des Kragens in den Rotor eingreift. Dies unterstützt einerseits die Lagerung des Rotors im Gehäuse zusätzlich und erhöht andererseits die Biegesteifigkeit des Radkraftdynamometers weiter.

Gemäß einer weiteren bevorzugten Ausführungsform der Erfindung ist es vorgesehen, dass am Rotorboden des Rotors ein Zentrierring angeordnet ist. Der Zentrierring bewirkt eine Zentrierung des Fahrzeugreifens bzw. des Fahrzeugrads gegenüber dem Rotor bzw. dem Gehäuse.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
Fig. 1 ein erstes Ausführungsbeispiel eines erfindungsgemäßen Radkraftdynamometers,
Fig. 2 ein zweites Ausführungsbeispiel eines erfindungsgemäßen Radkraftdynamometers und
Fig. 3 ein drittes Ausführungsbeispiel eines erfindungsgemäßen Radkraftdynamometers.

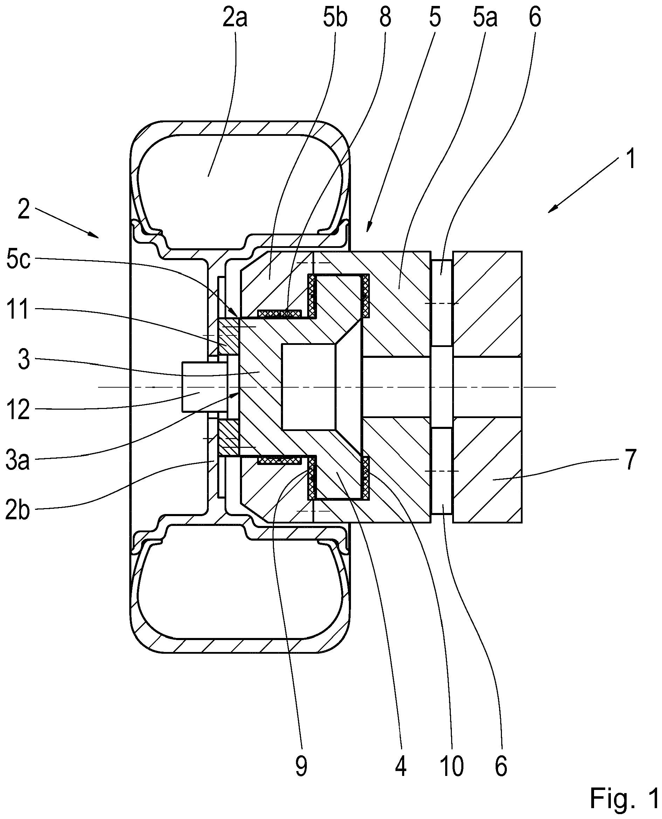

Fig. 1 zeigt eine beispielhafte Ausbildungsform eines erfindungsgemäßen Radkraftdynamometers 1 mit einem daran angeordneten Fahrzeugrad 2, bestehend aus einem Fahrzeugreifen 2a und einer Radfelge 2b. Das gezeigte Radkraftdynamometer 1 ist zur Messung von Kräften und Momenten ausgebildet, die während einer Rotation am Fahrzeugrad 2 auftreten. Insbesondere ist das Radkraftdynamometer 1 dabei zur Messung der Hochgeschwindigkeitsgleichförmigkeit des Fahrzeugrads 2 bzw. zur Messung der sog. High Speed Uniformity (HSU) ausgebildet. Das in Fig. 1 beispielhaft gezeigte Radkraftdynamometer 1 weist einen Rotor 3 mit einem äußeren Kragen 4 auf, welcher drehbar in einem biegesteifen und ortsfest angeordneten Gehäuse 5 gelagert ist. Das Gehäuse 5 besteht beispielsgemäß aus einem Gehäusekörper 5a sowie aus einer Gehäusekappe 5b und ist durch seine Geometrie und Materialbeschaffenheit besonders biegesteif ausgebildet. Der Gehäusekörper 5a und die Gehäusekappe 5b fassen den Rotor 3 axialfest im Gehäuse 5 ein. Über Kraftsensoren 6 ist das Gehäuse 5 über den Gehäusekörper 5b an einer ortsfesten Tragstruktur 7 abgestützt ist. Wie zu sehen ist, weist die Gehäusekappe 5a eine Öffnung 5c auf, durch welche ein Rotorboden 3a des Rotors 3 geführt ist. Weiterhin umfasst das Radkraftdynamometer 1 hydrostatische Gleitlager 8, 9, 10, welche zwischen dem Rotor 3 und dem Gehäuse 5 angeordnet sind, wobei ein erstes Gleitlager 8 als Radiallager 8 ausgebildet ist und ein zweites und ein drittes Gleitlager 9, 10 jeweils als Axiallager 9, 10 ausgebildet sind. Das erste hydrostatische Gleitlager 8 ist dabei an einer äußeren Radialfläche des Rotors 3 angeordnet, während das zweite hydrostatische Gleitlager 9 und das dritte hydrostatische Gleitlager 10 an gegenüberliegenden axialen Endflächen des Kragens 4 angeordnet sind. Das erste hydrostatische Gleitlager 8 weist auf seinem radialen Innenumfang eine Schmiertasche 8a auf, welche über eine nicht dargestellte Druckölzuführung mit Schmieröl versorgt wird, so dass ein ständiger Schmierfilm zwischen dem Radiallager 8 und der äußeren Radialfläche des Rotors 3 aufrecht erhalten wird. Ebenso weisen das zweite und das dritte hydrostatische Gleitlager 9, 10 auf ihren axial einander zugewandten Flächen Schmiertaschen 9a, 10a auf, welche ebenfalls über eine nicht dargestellte Druckölzuführung mit Schmieröl versorgt werden, so dass auch hier ein ständiger Schmierfilm zwischen den Axiallagern 9, 10 und dem Kragen 4 aufrecht erhalten wird. Der Rotorboden 3a des Rotors 3 ist mittels Radflanschadaptern 11 drehfest mit dem Fahrzeugrad 2 verbunden. Außerdem ist am Rotorboden 3a des Rotors 3 ein Zentrierring 12 angeordnet, welcher eine Zentrierung des Fahrzeugrads 2 gegenüber dem Rotor 3 bewirkt.

Die Lagerung des Fahrzeugrads 2 gegenüber der ortsfesten Tragstruktur 7 ist als biegesteife Konstruktion konzipiert, damit das Radkraftdynamometer 1 eine möglichst hohe Eigenfrequenz aufweist. Damit liegt die Messfrequenz, mit der die Kräfte und Momente bei einer HSU-Messung ermittelt werden, im Wesentlichen unterhalb der Eigenfrequenz des Radkraftdynamometers 1. Resonanzen zwischen der Eigenfrequenz des Radkraftdynamometers 1 und den Messfrequenzen können damit weitestgehend vermieden werden, so dass resonanzbedingte Messfehler wie Amplitudenerhöhung oder Phasenverschiebung minimiert werden.

Bei einer Messung rollt das Fahrzeugrad 2 auf einer realen oder simulierten, in Fig. 1 nicht dargestellten Fahrbahn, z. B. einer Lauftrommel, ab und ist mit einer definierten Radlast belastet. Die daraus resultierenden Kräfte und Momente werden über die Radfelge 2b auf den Rotor 3 und von diesem über die hydrostatischen Gleitlager 8, 9, 10 auf das Gehäuse 5 übertragen. Das Gehäuse 5 überträgt diese Kräfte und Momente dann auf die Kraftsensoren 6, über die sich das Gehäuse 5 an der Tragstruktur 7 abstützt. Das Fahrzeugrad 2 wird nach der Messung vom Radkraftdynamometer 1 entfernt.

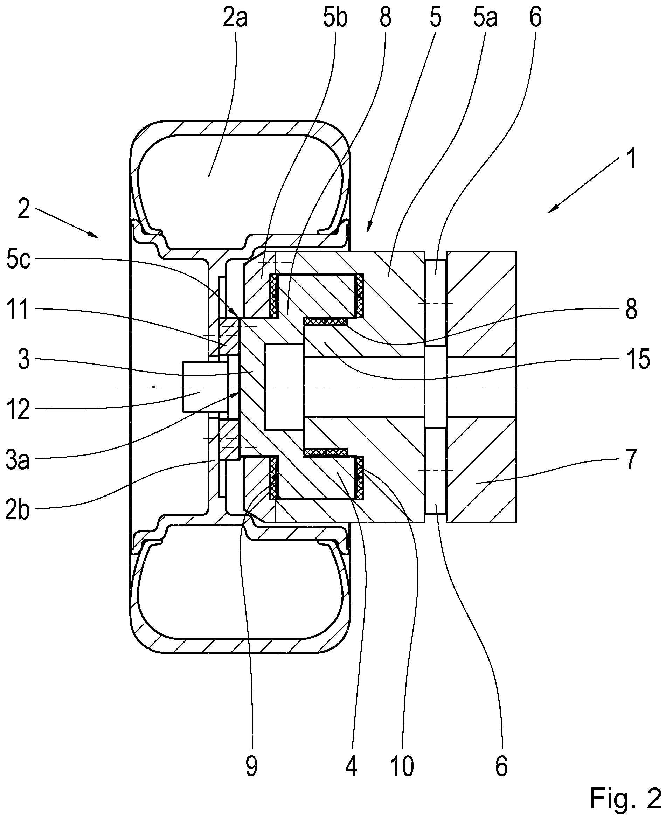

Fig. 2 zeigt eine weitere beispielhafte Ausbildungsform eines erfindungsgemäßen Radkraftdynamometers 1. Das Ausführungsbeispiel der Fig. 2 unterscheidet sich vom Ausführungsbeispiel der Fig. 1 zunächst durch die Ausbildung des Rotors 3 und des Gehäuses 5. Wie in Fig. 2 zu sehen ist, ist die axiale Länge des Kragens 4 auf Kosten der axialen Länge des Rotors 3 vergrößert. Weiterhin weist der Gehäusekörper 5a einen Hohlzapfen 15 auf, der im Bereich des Kragens 4 in den Rotor 3 eingreift. Dementsprechend ist das erste Gleitlager 8, welches beispielsgemäß als hydrostatisches Radiallager 8 ausgebildet ist, zwischen einer inneren Radialfläche des Kragens 4 und dem Hohlzapfen 15 angeordnet. Der Hohlzapfen 15 sitzt in der Darstellung der Fig. 2 von links axial auf dem Rotor 3 auf und spannt diesen axial ein. Indem der Hohlzapfen 15 derart in den Rotor 3 eingreift, kann die Biegesteifigkeit der beispielhaften Ausbildungsform des Radkraftdynamometers 1 weiter verbessert werden.

Auch die beispielhafte Ausbildungsform der Fig. 2 ermöglicht durch die biegesteife Konstruktion des Radkraftdynamometers 1 eine vergleichsweise hohe Eigenfrequenz des Radkraftdynamometers 1. Somit liegt die Messfrequenz, mit der die Kräfte und Momente bei einer HSU-Messung ermittelt werden, auch in diesem Fall im Wesentlichen unterhalb der Eigenfrequenz des Radkraftdynamometers 1. Resonanzen zwischen der Eigenfrequenz des Radkraftdynamometers 1 und den Messfrequenzen können entsprechend weitestgehend vermieden werden, so dass resonanzbedingte Messfehler wie Amplitudenerhöhung oder Phasenverschiebung minimiert werden.

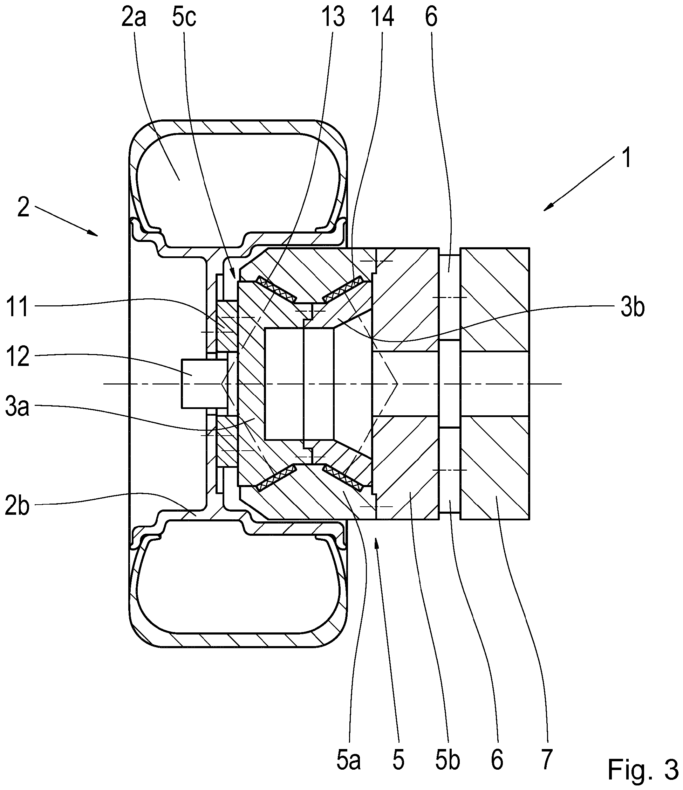

Fig. 3 zeigt eine nochmals weitere beispielhafte Ausbildungsform eines erfindungsgemäßen Radkraftdynamometers 1. Das Ausführungsbeispiel gemäß der Fig. 3 unterscheidet sich von den vorhergehenden Ausführungsbeispielen durch die zweiteilige Ausbildung des Rotors 3, bestehend aus dem Rotorboden 3a und einem Rotorring 3b, wobei der Rotorboden 3a und der Rotorring 3b jeweils eine Radialumfangsänderung aufweisen, indem sie sich, wie dargestellt, in einem Bereich einer axialen Mitte des Rotors kegelartig verjüngen. Dementsprechend kommt die in Fig. 3 gezeigte Ausbildungsform eines erfindungsgemäßen Radkraftdynamometers 1 mit nur zwei Gleitlagern 13, 14 aus, welche als Kegellager 13, 14 ausgebildet sind und auf den Kegelflächen des Rotors angeordnet sind. Die Kegellager 13, 14 sind beispielsgemäß als hydrostatisches Gleitlager 13, 14 ausgebildet. Indem sich der Rotor in einem axial mittleren Bereich kegelartig verjüngt, weisen die senkrecht auf den Kegel stehenden Druckwirkungslinien nach außen. Damit bilden die beiden Kegellager eine O-Anordnung, die besonders gut Momente aufnehmen kann.

Auch die beispielhafte Ausbildungsform der Fig. 3 ermöglicht durch die biegesteife Konstruktion des Radkraftdynamometers 1 die bereits im Zusammenhang mit den Ausbildungsformen der Figs. 1 und 2 genannten Beispiele.

### Bezugszeichen

- 1: Radkraftdynamometer
- 2: Fahrzeugrad
- 2a: Fahrzeugreifen
- 2b: Radfelgfelge
- 3: Rotor
- 3a: Rotorboden
- 3b: Rotorring
- 4: Kragen
- 5: Gehäuse
- 5a: Gehäusekörper
- 5b: Gehäusekappe
- 5c: Öffnung
- 6: Kraftsensor
- 7: Tragstruktur
- 8: Gleitlager
- 9: Gleitlager
- 10: Gleitlager
- 11: Radflanschadapter
- 12: Zentrierring
- 13: Gleitlager
- 14: Gleitlager
- 15: Hohlzapfen

## Patentansprüche

1. Radkraftdynamometer (1) zur Messung von Kräften und Momenten, die auf einen Fahrzeugreifen (2a) und ein Fahrzeugrad (2) wirken, mittels Kraftsensoren (6), das Radkraftdynamometer (1) umfassend: eine Radachse, ein Gehäuse (5), Kraftsensoren (6), und einer Tragstruktur (7), wobei das Fahrzeugrad (2) drehbar mittels einer Radachse gelagert ist, und die Radachse als Rotor (3) ausgebildet ist, welcher axialfest und in Umfangsrichtung drehbar in einem biegesteifen und ortsfest angeordneten Gehäuse (5) gelagert ist, wobei wobei das Radkraftdynamometer (1) **dadurch gekennzeichnet ist, dass** das Gehäuse (5) einen Gehäusekörper (5a) und eine Gehäusekappe (5b) umfasst, wobei der Rotor (3) zwischen dem Gehäusekörper (5a) und der Gehäusekappe (5b) eingespannt ist, wobei ein Rotorboden (3a) des Rotors (3) durch eine Öffnung (5c) der Gehäusekappe (5a) geführt ist und wobei die Kraftsensoren (6) zwischen dem Gehäusekörper (5a) und einer Tragstruktur (7) angeordnet sind.

2. Radkraftdynamometer (1) nach Anspruch 1, **dadurch gekennzeichnet, dass** der Rotor (3) einen äußeren Kragen (4) aufweist.

3. Radkraftdynamometer (1) nach Anspruch 2, **dadurch gekennzeichnet, dass** der Rotor (3) einen Rotorboden (3a) und einen Rotorring (3b) umfasst, wobei der Rotorboden (3a) und der Rotorring (3b) jeweils eine Radialumfangsänderung aufweisen, indem sie sich in einem Bereich einer axialen Mitte des Rotors (3) kegelartig verjüngen oder verstärken.

4. Radkraftdynamometer (1) nach mindestens einem der Ansprüche 1 bis 3, **dadurch gekennzeichnet, dass** der Gehäusekörper (5a) an einer ortsfesten Tragstruktur (7) abgestützt ist.

5. Radkraftdynamometer (1) nach mindestens einem der Ansprüche 1 bis 4, **dadurch gekennzeichnet, dass** das Radkraftdynamometer (1) weiterhin Gleitlager (8, 9, 10, 13, 14) umfasst, welche zwischen dem Rotor (3) und dem Gehäuse (5) angeordnet sind.

6. Radkraftdynamometer (1) nach Anspruch 5, **dadurch gekennzeichnet, dass** ein erstes Gleitlager (8) als Radiallager (8) ausgebildet ist und dass ein zweites und ein drittes Gleitlager (9, 10) jeweils als Axiallager (9, 10) ausgebildet sind.

7. Radkraftdynamometer (1) nach Anspruch 5, **dadurch gekennzeichnet, dass** ein erstes und ein zweites Gleitlager (13, 14) als Kegellager (13, 14) ausgebildet sind.

8. Radkraftdynamometer (1) nach mindestens einem der Ansprüche 5 bis 7, **dadurch gekennzeichnet, dass** die Gleitlager (8, 9, 10, 13, 14) als hydrostatische Gleitlager (8, 9, 10, 13, 14) ausgebildet sind.

9. Radkraftdynamometer (1) nach Anspruch 6, **dadurch gekennzeichnet, dass** das erste axiale Gleitlager an einer Radialfläche des Rotors oder an einer Radialfläche des Kragens angeordnet ist und dass das zweite und das dritte Gleitlager an gegenüberliegenden axialen Endflächen des Kragens angeordnet sind.

10. Radkraftdynamometer (1) nach mindestens einem der Ansprüche 3 bis 9, **dadurch gekennzeichnet, dass** der Rotorboden (3a) des Rotors (3) mittels Radflanschadaptern (11) drehfest mit dem Fahrzeugrad (2) verbindbar ist.

11. Radkraftdynamometer (1) nach mindestens einem der Ansprüche 1 bis 10, **dadurch gekennzeichnet, dass** der Gehäusekörper (5a) einen Hohlzapfen (15) aufweist, der zumindest im Bereich des Kragens (4) in den Rotor (3) eingreift.

12. Radkraftdynamometer (1) nach mindestens einem der Ansprüche 3 bis 11, **dadurch gekennzeichnet, dass** am Rotorboden (3a) des Rotors (3) ein Zentrierring (12) angeordnet ist.

## Claims

1. Wheel-force dynamometer (1) for measuring forces and torques acting on a vehicle tyre (2a) and a vehicle wheel (2), by means of force sensors (6), the wheel-force dynamometer (1) comprising: a wheel axle, a housing (5), force sensors (6) and a supporting structure (7), wherein the vehicle wheel (2) is rotatably mounted by means of a wheel axle, and the wheel axle is designed as a rotor (3) which is mounted in an axially fixed and circumferentially rotatable manner in a rigid and locationally-fixed housing (5), wherein the wheel-force dynamometer (1) is **characterized in that** the housing (5) has a housing body (5a) and a housing cap (5b), wherein the rotor (3) is clamped between the housing body (5a) and the housing cap (5b), wherein a rotor base (3a) of the rotor (3) passes through an opening (5c) in the housing cap (5b) and wherein the force sensors (6) are arranged between the housing body (5a) and a supporting structure (7).

2. Wheel-force dynamometer (1) according to Claim 1, **characterized in that** the rotor (3) has an outer collar (4) .

3. Wheel-force dynamometer (1) according to Claim 2, **characterized in that** the rotor (3) comprises a rotor head (3a) and a rotor ring (3b), wherein the rotor base (3a) and the rotor ring (3b) each have a radial variation over the circumference, **in that** they taper or increase in size conically in an axially middle area of the rotor (3) .

4. Wheel-force dynamometer (1) according to at least one of Claims 1 to 3, **characterized in that** the housing body (5a) is supported on a locationally fixed supporting structure (7).

5. Wheel-force dynamometer (1) according to at least one of Claims 1 to 4, **characterized in that** the wheelforced dynamometer (1) also comprises slide bearings (8, 9, 10, 13, 14), which are arranged between the rotor (3) and the housing (5).

6. Wheel-force dynamometer (1) according to Claim 5, **characterized in that** a first slide bearing (8) is designed as a radial bearing (8) and **in that** a second and a third slide bearing (9, 10) are each designed as an axial bearing (9, 10).

7. Wheel-force dynamometer (1) according to Claim 5, **characterized in that** a first and a second slide bearing (13, 14) are designed as cone bearings (13, 14).

8. Wheel-force dynamometer (1) according to at least one of Claims 5 to 7, **characterized in that** the slide bearings (8, 9, 10, 13, 14) are designed as hydrostatic slide bearings (8, 9, 10, 13, 14).

9. Wheel-force dynamometer (1) according to Claim 6, **characterized in that** the first axial slide bearing is arranged on a radial surface of the rotor or on a radial surface of the collar and **in that** the second and the third slide bearing are arranged on opposite axial end surfaces of the collar.

10. Wheel-force dynamometer (1) according to at least one of Claims 3 to 9, **characterized in that** the rotor base (3a) of the rotor (3) can be connected to the vehicle wheel (2) for conjoint rotation by means of wheel flange adapters (11).

11. Wheel-force dynamometer (1) according to at least one of Claims 1 to 10, **characterized in that** the housing body (5a) has a hollow stud (15), which engages in the rotor (3) at least in an area of the collar (4).

12. Wheel-force dynamometer (1) according to at least one of Claims 3 to 11, **characterized in that** a centring ring (12) is arranged on the rotor base (3a) of the rotor (3) .

## Revendications

1. Dynamomètre de roue (1) pour la mesure de forces et de moments qui agissent sur un pneu de véhicule (2a) et une roue de véhicule (2), au moyen de capteurs de force (6), le dynamomètre de roue (1) comprenant : un axe de roue, un boîtier (5), des capteurs de force (6) et une structure porteuse (7), la roue de véhicule (2) étant montée rotative au moyen d'un axe de roue, et l'axe de roue étant réalisé sous forme de rotor (3), lequel est monté de manière fixe axialement et de manière rotative dans la direction périphérique dans un boîtier (5) rigide à la flexion et disposé de manière fixée à demeure, le dynamomètre de roue (1) étant **caractérisé en ce que** le boîtier (5) comprend un corps de boîtier (5a) et un capuchon de boîtier (5b), le rotor (3) étant serré entre le corps de boîtier (5a) et le capuchon de boîtier (5b), un fond (3a) du rotor (3) étant guidé à travers une ouverture (5c) du capuchon de boîtier (5b) et les capteurs de force (6) étant disposés entre le corps de boîtier (5a) et une structure porteuse (7).

2. Dynamomètre de roue (1) selon la revendication 1, **caractérisé en ce que** le rotor (3) présente une collerette extérieure (4).

3. Dynamomètre de roue (1) selon la revendication 2, **caractérisé en ce que** le rotor (3) comprend un fond de rotor (3a) et une bague de rotor (3b), le fond de rotor (3a) et la bague de rotor (3b) présentant respectivement une variation périphérique radiale, par le fait qu'ils s'amincissent ou grossissent de façon conique dans une région d'un centre axial du rotor (3).

4. Dynamomètre de roue (1) selon au moins l'une des revendications 1 à 3, **caractérisé en ce que** le corps de boîtier (5a) est supporté sur une structure porteuse (7) fixée à demeure.

5. Dynamomètre de roue (1) selon au moins l'une des revendications 1 à 4, **caractérisé en ce que** le dynamomètre de roue (1) comprend en outre des paliers lisses (8, 9, 10, 13, 14), lesquels sont disposés entre le rotor (3) et le boîtier (5).

6. Dynamomètre de roue (1) selon la revendication 5, **caractérisé en ce qu'**un premier palier lisse (8) est réalisé sous forme de palier radial (8) et **en ce qu'**un deuxième et un troisième palier lisse (9, 10) sont réalisés respectivement sous forme de paliers axiaux (9, 10) .

7. Dynamomètre de roue (1) selon la revendication 5, **caractérisé en ce qu'**un premier et un deuxième palier lisse (13, 14) sont réalisés sous forme de paliers coniques (13, 14).

8. Dynamomètre de roue (1) selon au moins l'une des revendications 5 à 7, **caractérisé en ce que** les paliers lisses (8, 9, 10, 13, 14) sont réalisés sous forme de paliers lisses (8, 9, 10, 13, 14) hydrostatique.

9. Dynamomètre de roue (1) selon la revendication 6, **caractérisé en ce que** le premier palier lisse axial est disposé au niveau d'une face radiale du rotor ou au niveau d'une face radiale de la collerette, et **en ce que** le deuxième et le troisième palier lisse sont disposés au niveau de faces d'extrémité axiales opposées de la collerette.

10. Dynamomètre de roue (1) selon au moins l'une des revendications 3 à 9,
**caractérisé en ce que** le fond (3a) du rotor (3) peut être relié de manière solidaire en rotation à la roue de véhicule (2) au moyen d'adaptateurs de bride de roue (11) .

11. Dynamomètre de roue (1) selon au moins l'une des revendications 1 à 10,
**caractérisé en ce que** le corps de boîtier (5a) présente un tourillon creux (15) qui vient en prise dans le rotor (3) au moins dans la région de la collerette (4).

12. Dynamomètre de roue (1) selon au moins l'une des revendications 3 à 11, **caractérisé en ce qu'**une bague de centrage (12) est disposée sur le fond (3a) du rotor (3).
